# EUROPEAN PATENT APPLICATION

(11) **EP 4 841 030 A1**
(43) Date of publication of application: **18.11.2026**
(21) Application number: 25738939.5
(22) Date of filing: 10.01.2025
(51) Int. Cl.: E02F 9/26, E02F 9/24

(54) **OPTIONAL EQUIPMENT ATTACHMENT/DETACHMENT SUPPORT SYSTEM AND WORK MACHINE**

(30) Priority: 11.01.2024 JP 2024002850
(71) Applicant: Hitachi Construction Machinery Co., Ltd., Tokyo 110-0015 (JP)
(72) Inventor: KIMURA, Naoya, Tsuchiura-shi, Ibaraki 300-0013 (JP); MIWA, Shigeru, Tsuchiura-shi, Ibaraki 300-0013 (JP); NAGAOKA, Yuki, Tsuchiura-shi, Ibaraki 300-0013 (JP)
(74) Representative: MERH-IP Matias Erny Reichl Hoffmann Patentanwälte PartG mbB
(86) International application number: PCT/JP2025/000738
(87) International publication number: WO 2025/150572

(57) **Abstract**

In an optional-equipment attachment and detachment support system equipped with a controller configured to control a function of supporting attachment and detachment work of optional equipment with respect to a work machine, the controller comprises an attachment and detachment target determination unit configured to determine attachment and detachment target equipment that is the optional equipment to be attached or detached, a work procedure generation unit configured to generate an attachment and detachment work procedure for the attachment and detachment target equipment based on interrelationships among a plurality of pieces of optional equipment, and a deviation determination unit configured to output a connection equipment deviation warning when optional equipment newly attached or detached differs from optional equipment instructed to be attached or detached next in the attachment and detachment work procedure.

## Description

### Technical Field

The present invention relates to a system that supports attachment and detachment of optional equipment with respect to a work machine.

### Background Art

In recent years, a work machine has been adapting to various work applications by adding functions (options) consisting of multiple devices. Moreover, it is envisioned that multiple different options may be added to a single piece of a work machine to accommodate complex work applications. Such additional work may be carried out not only by service personnel but also by customers.

Consequently, several technologies have been devised to provide maintenance information and support for maintenance work on equipment installed on a work machine.

As a technology that displays inspection priorities (failure risks) for each of the multiple maintenance tasks performed on a work machine and presents the necessary equipment for each inspection task, there is, for example, what is described in Patent Document 1.

Moreover, as a technology for recognizing and providing information on optional equipment installed on a work machine, there is, for example, the one described in Patent Document 2.

### Prior Art Document

### Patent Document

Patent Document 1: JP 2020-102009 A
Patent Document 2: JP 2013-151786 A

### Summary of the Invention

### Problems to be Solved by the Invention

However, when multiple options are added or removed at once, the worker (customer or service personnel) must grasp the equipment needed for each option, determine the work procedure with reference to manuals, etc., and perform the work. For the increasing number of options every year, following this procedure each time an option is added becomes a hassle for the worker.

In Patent Document 1, the priority for each task item can be displayed, but it cannot rearrange the items or present specific work methods. Therefore, the effort required rearrange a large number of work items and to refer to manuals to know the work method for each item remains.

Furthermore, depending on the option, the function of another option may be required as a prerequisite to realize its function. Therefore, if the worker forgets to install the other option's equipment required as a prerequisite, the newly added option may not function.

In Patent Document 2, newly installed equipment can be recognized individually, but as mentioned above, an option is a function that consists of multiple pieces of equipment, and therefore, it cannot be linked with the option. Therefore, it is not possible to grasp all the equipment that needs to be attached or detached when adding options, and some equipment may be forgotten to be attached or detached.

For example, if the installation and calibration work for equipment used for the toe display function (MG: Machine Guidance) is not completed, the installation and calibration work for the toe control function (MC: Machine Control) equipment cannot be done. If the installation work for MC equipment is conducted ignoring this interrelationship between options, the precision of MC may not be ensured.

The present invention has been made in view of the above problems, and its purpose is to provide an optional-equipment attachment and detachment support system that can reduce the labor of attachment and detachment of optional equipment for a work machine, suppress work mistakes, and ensure the operation of newly added options to the work machine.

### Means for Solving the Problems

To achieve the above-mentioned objectives, the present invention provides an optional-equipment attachment and detachment support system equipped with a controller that controls functions supporting attachment and detachment of optional equipment with respect to a work machine, the controller comprising an attachment and detachment target determination unit configured to determine attachment and detachment target equipment that is optional equipment to be attached and detached, a work procedure generation unit configured to generate an attachment and detachment work procedure for the attachment and detachment target equipment based on an interrelationship between a plurality of pieces of the optional equipment, and a deviation determination unit configured to output a connection-equipment deviation warning when a piece of optional equipment newly attached or detached differs from a piece of optional equipment instructed to be attached or detached next in the attachment and detachment work procedure.

### Advantages of the Invention

According to the present invention, it becomes possible to reduce the labor involved in attachment and detachment of optional equipment from a work machine while suppressing work mistakes and ensure the operation of newly added options to a work machine.

### Brief Description of the Drawings

FIG. 1 is an overview of a hydraulic excavator in an embodiment of the present invention.
FIG. 2 is a configuration diagram of the optional-equipment attachment and detachment support system in an embodiment of the present invention.
FIG. 3 shows an example of current configuration information in an embodiment of the present invention.
FIG. 4 shows an example of option change instruction information in an embodiment of the present invention.
FIG. 5 shows an example of inter-option relationship information in an embodiment of the present invention.
FIG. 6 shows an example of an equipment configuration database in an embodiment of the present invention.
FIG. 7 shows an example of the option required configuration information in an embodiment of the present invention.
FIG. 8 shows a method of determining attachment and detachment target equipment in an embodiment of the present invention.
FIG. 9 shows an example of attachment and detachment of target equipment information in an embodiment of the present invention.
FIG. 10 shows an example of the interrelationship between the changed option and the lower option in an embodiment of the present invention.
FIG. 11 shows an example of equipment priority information in an embodiment of the present invention.
FIG. 12 shows an example of the attachment and detachment work procedure in an embodiment of the present invention.
FIG. 13 shows an example of a connection equipment deviation warning in an embodiment of the present invention.
FIG. 14 is a flowchart showing the overall processing of the optional-equipment attachment and detachment support system in an embodiment of the present invention.
FIG. 15 is a flowchart showing the processing of the attachment and detachment target determination unit in an embodiment of the present invention.
FIG. 16 is a flowchart showing the details of the process of generating option required configuration information in the processing of the attachment and detachment target determination unit in an embodiment of the present invention.
FIG. 17 is a flowchart showing the details of the process of generating attachment and detachment target equipment information in the processing of the attachment and detachment target determination unit in an embodiment of the present invention.
FIG. 18 is a flowchart showing the processing of the work procedure generation unit in an embodiment of the present invention.
FIG. 19 is a flowchart showing the details of the processing for determining the priority of attachment and detachment target equipment in the processing of the work procedure generation unit in an embodiment of the present invention.
FIG. 20 is a flowchart showing the details of the process of determining the priority of options in the processing of the work procedure generation unit in an embodiment of the present invention.
FIG. 21 is a flowchart showing the details of the process of creating attachment and detachment work procedures in the processing of the work procedure generation unit in an embodiment of the present invention.
FIG. 22 shows the processing of the deviation determination unit in an embodiment of the present invention.

### Modes for Carrying the Invention

Hereinafter, embodiments of the present invention will be described with reference to the drawings. In each figure, equivalent members are given the same reference numerals, and duplicated descriptions are omitted as appropriate.

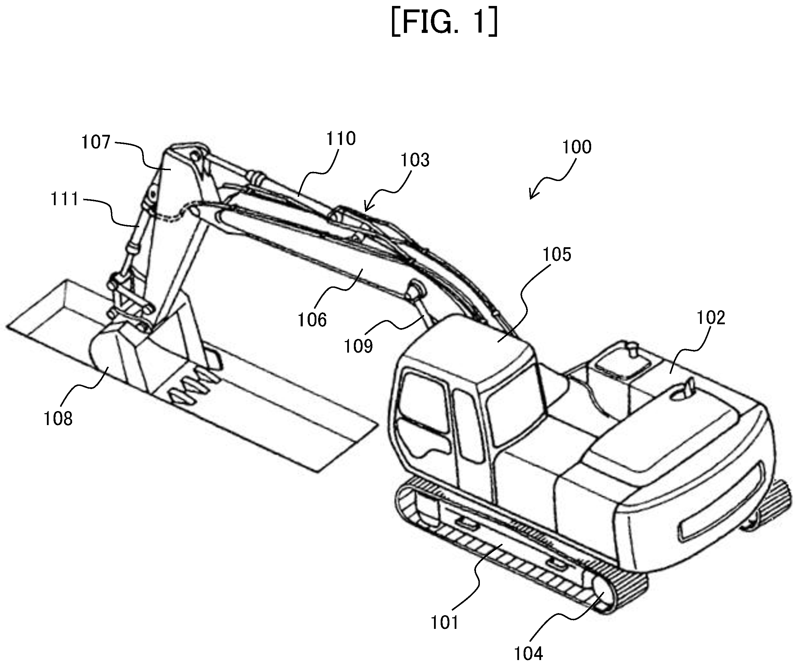

FIG. 1 is an overview of a hydraulic excavator equipped with an optional-equipment attachment and detachment support system in this embodiment. It should be noted that the application of the optional-equipment attachment and detachment support system according to the present invention is not limited to hydraulic excavators and can also be applied to other work machines such as crawlers and wheel loaders.

In FIG. 1, the hydraulic excavator 100 comprises a lower travel body 101, an upper swing body 102 mounted on the lower travel body 101 so as to be able to swivel, and a front work machine 103 mounted on the upper swing body 102 so as to be able to pivot. The lower travel body 101, upper swing body 102, and front work machine 103 form the body of the hydraulic excavator 100. The lower travel body 101 is driven by a travel motor 104, and the upper swing body 102 is driven by a swing motor (not shown). The upper swing body 102 is provided with an operator's cab 105 in which the worker is seated.

The front work machine 103 comprises a boom 106 pivotally mounted on the upper swing body 102, an arm 107 pivotally mounted on the tip part of the boom 106, and a bucket 108 pivotally mounted on the tip part of the arm 107. The boom 106 is driven by a boom cylinder 109, the arm 107 is driven by an arm cylinder 110, and the bucket 108 is driven by a bucket cylinder 111.

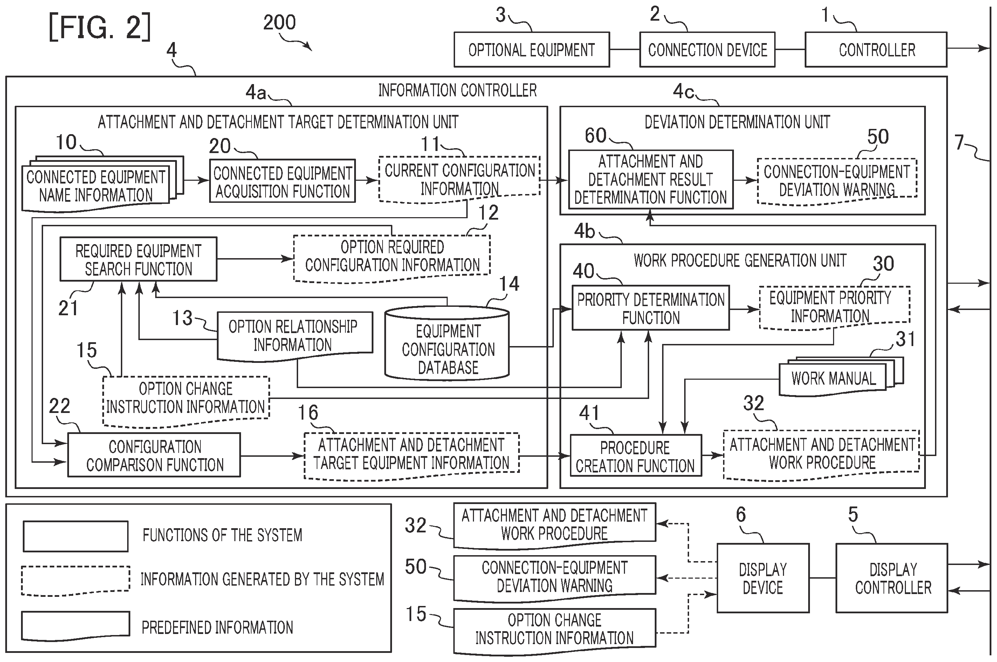

FIG. 2 is a configuration diagram of the optional-equipment attachment and detachment support system. The optional-equipment attachment and detachment support system 200 is mounted on the hydraulic excavator 100 and comprises a controller 1, an information controller 4, and a display controller 5, which are respectively provided in the operator's cab 105 on the upper swing body 102. Each controller is composed of processing devices such as processors including a CPU, storage devices such as memory or a hard disk, and input-output interfaces for signal input and output with external devices, and implements each function by executing programs stored in the storage devices. Note that, in addition to the controllers shown in FIG. 2, other controllers corresponding to applications and functions may also be mounted on the body of the hydraulic excavator 100.

The controller 1 performs control for driving driven bodies such as the front work machine 103 of the work machine. Optional equipment 3 is connected to the controller 1 via a connecting device 2, and is equipment required for the function (hereinafter referred to as option) added to the hydraulic excavator 100. The connection device 2 has the function of transmitting the name of the optional equipment 3 to the controller 1.

It should be noted that optional equipment 3 may be connected to one or more controllers other than the controller 1. Moreover, the optional equipment 3 is not limited to controllers or electronic devices and may include devices that cannot be electrically connected (e.g., attachments, hydraulic equipment, etc.). Optional equipment 3 that cannot be electrically connected is attached to the vehicle body without the use of a connection device 2, and its name is transmitted to information controller 4 by manual input from the worker via display device 6. Display device 6 also serves as an input device for information controller 4 and is constituted by a touch panel monitor installed, for example, in the operator's cab 105.

Information controller 4 collects operational information from controllers such as the controller 1 and display controller 5 that are connected to the vehicle body via the vehicle network 7. Information controller 4 is equipped with an attachment and detachment target determination unit 4a, a work procedure generation unit 4b, and a deviation determination unit 4c.

The attachment and detachment target determination unit 4a has an attached equipment acquisition function 20, a required equipment search function 21, and a configuration comparison function 22, and stores connected equipment name information 10, current configuration information 11, option required configuration information 12, option relationship information 13, an equipment configuration database 14, and option change instruction information 15.

The work procedure generation unit 4b has a priority determination function 40 and a procedure creation function 41, and stores equipment priority information 30, a work manual 31, and an attachment and detachment work procedure 32.

The deviation determination unit 4c has an attachment and detachment result determination function 60 and stores a connection equipment deviation warning 50.

Display controller 5 outputs information instructed for display from information controller 4 to display device 6 and transmits information input via display device 6 to information controller 4.

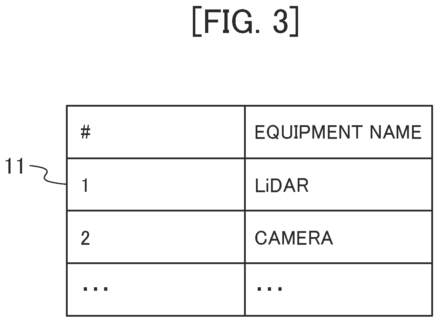

FIG. 3 is a diagram showing an example of the current configuration information 11. Current configuration information 11 includes information on devices currently connected to the vehicle body. In the example of FIG. 3, LiDAR and camera are currently shown to be connected to the vehicle body.

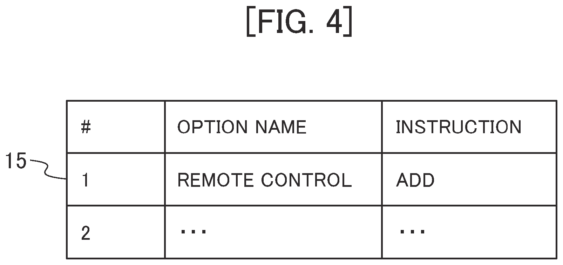

FIG. 4 is a diagram showing an example of option change instruction information 15. Option change instruction information 15 compiles information about options (hereafter, change options) instructed to be added or removed by the worker via display device 6. In the example of FIG. 4, the instruction to add remote control is indicated.

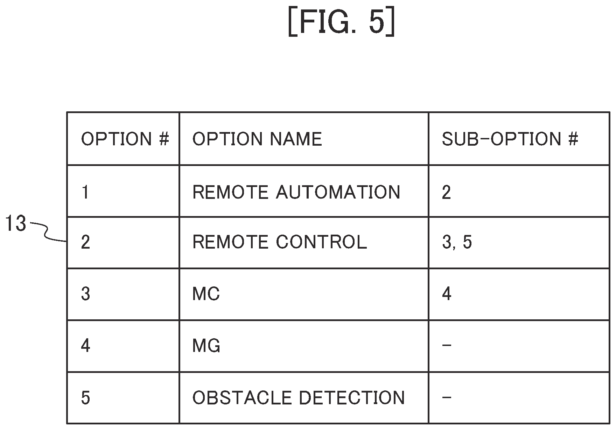

FIG. 5 is a diagram showing an example of option relationship information 13. Option relationship information 13 compiles information representing the interrelationships among options. Among options, some functions based on the premise that other options are operational, and these other options are referred to as sub-options. In the example of FIG. 5, the sub-option for remote automation is remote control, the sub-options for remote control are MC and obstacle detection, and the sub-option for MC is MG.

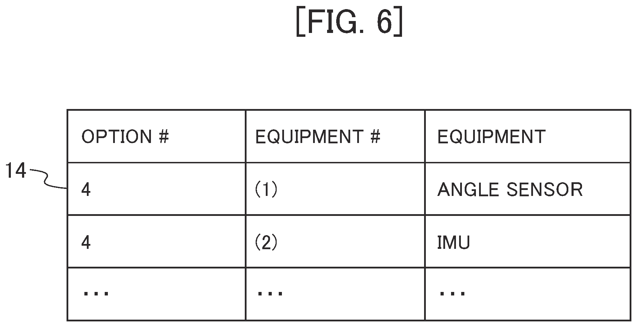

FIG. 6 is a diagram showing an example of the equipment configuration database 14. The equipment configuration database 14 compiles information about the equipment required by each option. In the example of FIG. 6, it is shown that the equipment required for MG (option number 4) includes an angle sensor and IMU.

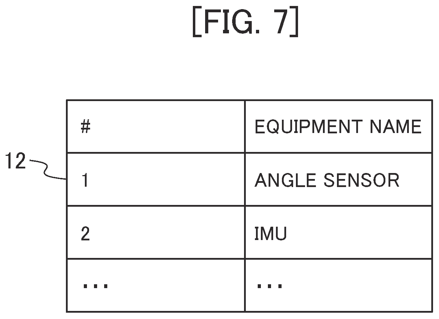

FIG. 7 is a diagram showing an example of option change instruction information 15. Option required configuration information 12 compiles information about the equipment required for change options. In the example of FIG. 7, the equipment required for change options includes an angle sensor and IMU.

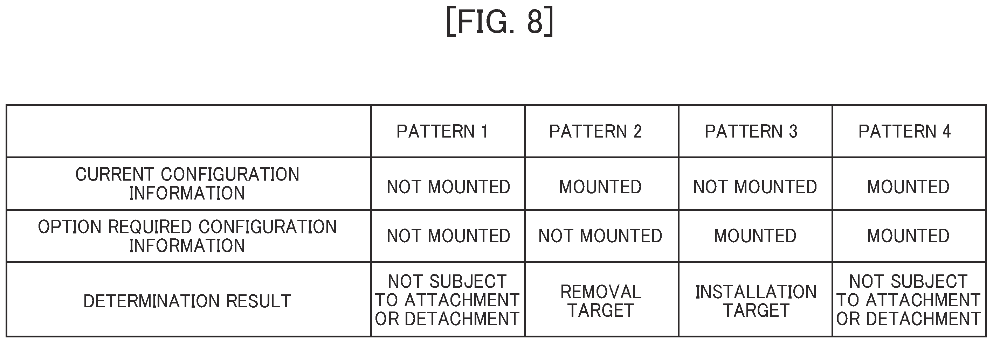

FIG. 8 is a diagram showing the method for determining attachment and detachment target equipment. Details of FIG. 8 are described later.

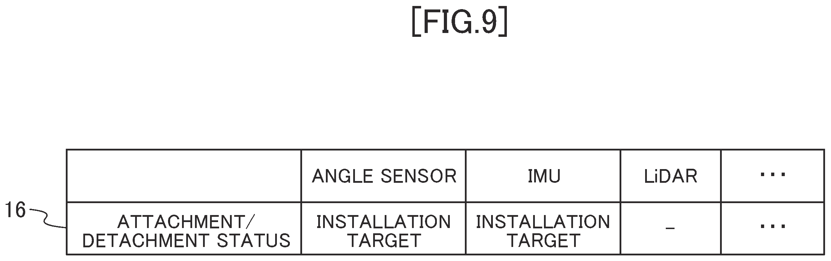

FIG. 9 is a diagram showing an example of attachment and detachment target equipment information 16. In this example, the angle sensor and IMU are attachment and detachment targets, whereas LiDAR is not an attachment and detachment target.

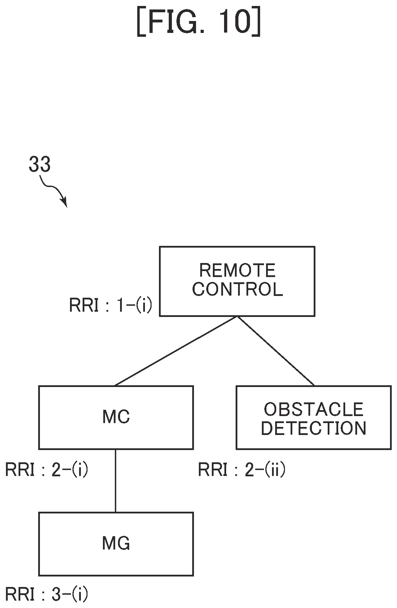

FIG. 10 is a diagram showing an example of the interrelationship between change options and sub-options. In this example, the interrelationship between change options and sub-options is represented by a tree diagram 33, with the change option "remote control" positioned at the top, followed directly below by the sub-options "MC" and "obstacle detection", and further down with "MG", a sub-option of "MC".

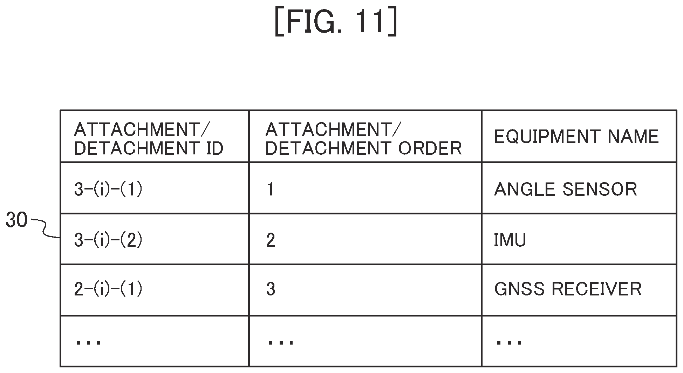

FIG. 11 is a diagram illustrating an example of equipment priority information 30. Equipment priority information 30 compiles information on the attachment and detachment order of equipment required for change options. In the example of FIG. 11, the installation order when adding "remote control" is angle sensor, IMU, and GNSS receiver, while the removal order when deleting "remote control" is GNSS receiver, IMU, and angle sensor.

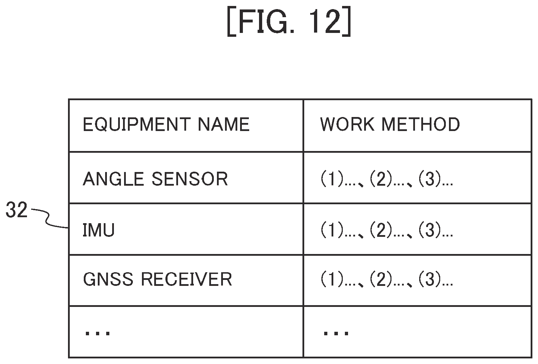

FIG. 12 is a diagram showing an example of the attachment and detachment work procedure 32. The attachment and detachment work procedure 32 is an arrangement of work methods for attachment and detachment target equipment extracted from work manual 31 based on equipment priority information 30. In the example of FIG. 12, the work methods are arranged in the order of angle sensor, IMU, and GNSS receiver.

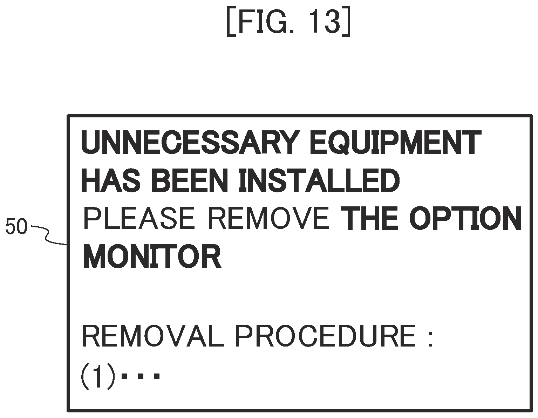

FIG. 13 is a diagram showing an example of a connection equipment deviation warning 50. The connection equipment deviation warning 50 is displayed on the display device 6 when a device other than the attachment and detachment target equipment is removed or installed. The connection equipment deviation warning 50 includes a work procedure for returning optional equipment that is erroneously attached or detached to its state before the attachment or detachment.

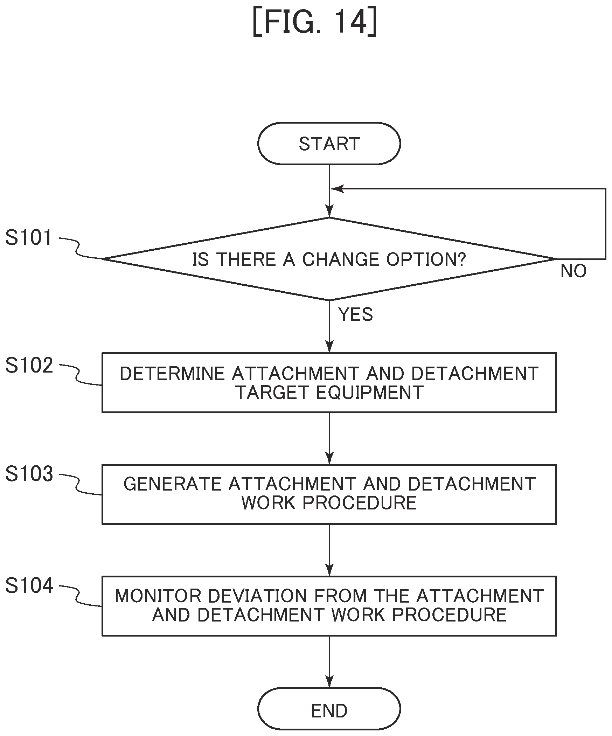

The processing of the optional-equipment attachment and detachment support system 200 is explained with reference to FIGS. 14 to 22.

FIG. 14 is a flowchart showing the overall processing of the optional-equipment attachment and detachment support system 200.

First, determine whether there is a change option (step S101). If the determination result of step S101 is NO, return to step S101.

If the determination result of step S101 is YES, decide on optional equipment 3 requiring attachment and detachment (hereafter, attachment and detachment target equipment) for the change option (step S102). The processing of step S102 is performed by the attachment and detachment target determination unit 4a (shown in FIG. 2). Details of step S102 are described later.

Following step S102, create an attachment and detachment work procedure 32 (step S103). The processing of step S103 is performed by the work procedure generation unit 4b (shown in FIG. 2). Details of step S103 are described later.

Following step S103, monitor whether the actual attachment and detachment operation by the worker deviates from the attachment and detachment work procedure 32 (step S104), and end the flow. The processing of step S104 is performed by the deviation determination unit 4c (shown in FIG. 2). Details of step S104 are described later.

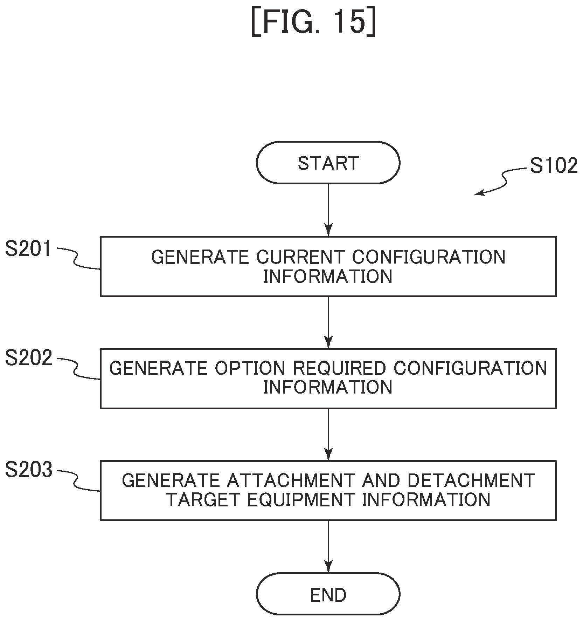

Details of step S102 in FIG. 14 are explained using FIG. 15.

First, generate current configuration information 11 (step S201). Specifically, first inquire the name (connected equipment name information 10) of equipment currently connected to the vehicle body (hereafter, connection equipment). For example, if the connected equipment is a controller, directly obtain the controller name. On the other hand, if the target equipment is an electronic device such as a sensor, obtain the device name from the controller to which it is connected. Then, list the obtained names of the connection equipment and save them as current configuration information 11. In the example of FIG. 3, the names "LiDAR" and "camera" are obtained as connection equipment.

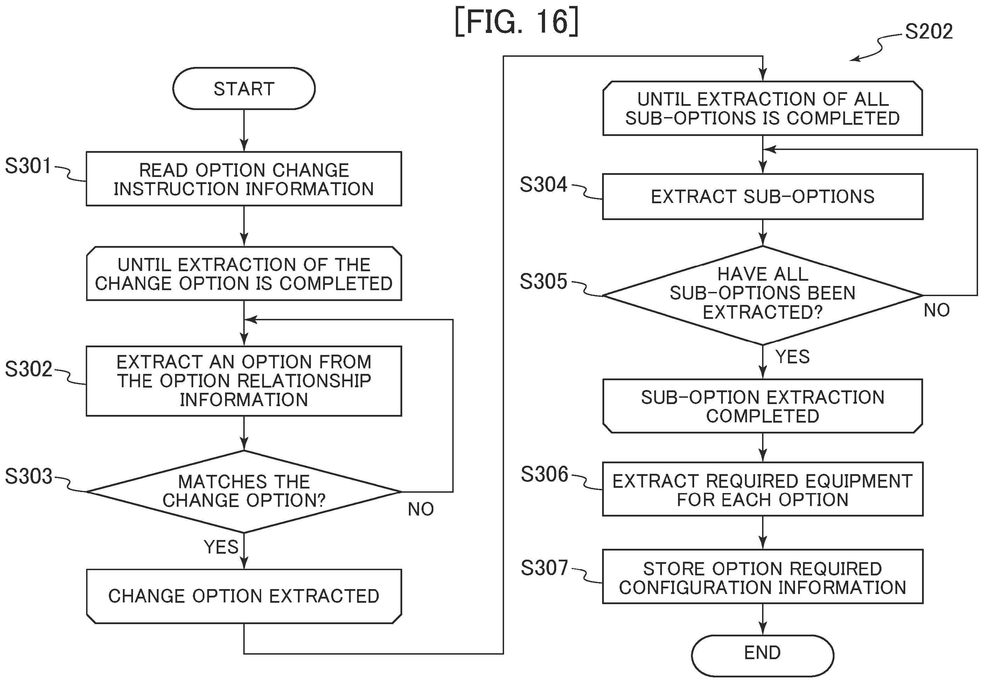

Following step S201, generate option required configuration information 12 (step S202). Details of step S202 are explained using FIG. 16.

First, read option change instruction information 15 (step S301).

Following step S301, extract an option from option relationship information 13 (step S302), and determine whether it matches the change option (step S303). If the determination result of step S303 is NO, return to step S302.

If the determination result of step S303 is YES, extract sub-options of the change option from option relationship information 13 (step S304), and determine whether information on all sub-options has been extracted (step S305). In the example of FIG. 5, for instance, if the change option is remote control, the sub-options MC and obstacle detection are extracted, and further the sub-option MG of MC is extracted. On the other hand, since MG and obstacle detection have no sub-options, all sub-options are extracted.

If the determination result of step S305 is YES, extract the required equipment for each change option and sub-option extracted in step S304 from equipment configuration database 14 (step S306). In the example of FIG. 6, for MG (option number 4), an angle sensor and IMU are extracted as required equipment.

Following step S306, save the list of required equipment extracted in step S306 as option required configuration information 12 (step S307), and end the flow.

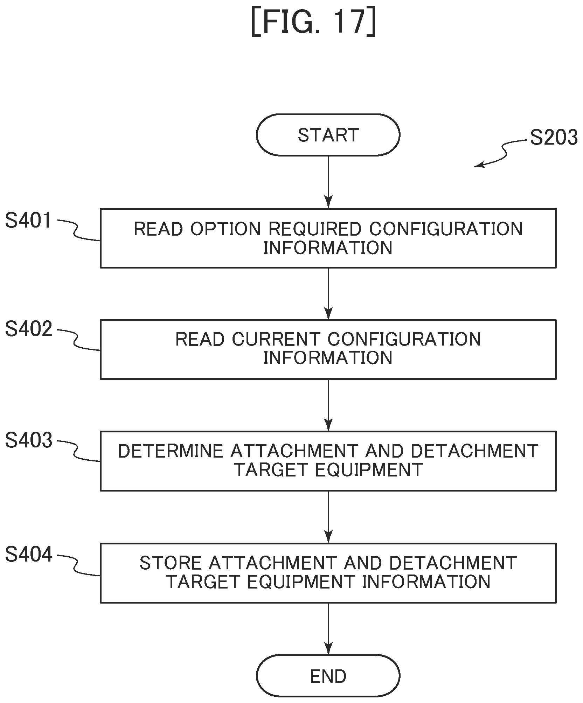

Returning to FIG. 15, following step S202, generate attachment and detachment target equipment information 16 (step S203), and end the flow. Details of step S203 are explained using FIG. 17.

First, read option required configuration information 12 (step S401).

Following step S401, read current configuration information 11 (step S402).

Following step S402, compare current configuration information 11 with option required configuration information 12, and determine whether each device is attachment and detachment target equipment according to the determination method shown in FIG. 8 (step S403). In FIG. 8, 'MOUNTED' indicates that the equipment subject to determination is in the mounted state, 'NOT MOUNTED' indicates that it is not mounted, and there are four combinations of the state in the current configuration information 11 and the state in the option required configuration information 12. The determination result 'INSTALLATION TARGET' indicates that it is subject to installation, 'REMOVAL TARGET' indicates that it is subject to removal, and 'NOT SUBJECT TO ATTACHMENT OR DETACHMENT' indicates that it is not subject to attachment or detachment. Taking pattern 3 as an example, the equipment's state in the current configuration information 11 is not mounted, but it is mounted in the option required configuration information 12, so the determination result is 'INSTALLATION TARGET', indicating it is subject to installation.

Following Step S403, the determination result of Step S403 is saved as attachment and detachment target equipment information 16 (Step S404), and the flow is concluded. In the example of FIG. 9, the angle sensor and IMU are the objects to be installed, while LiDAR is not subject to attachment or detachment.

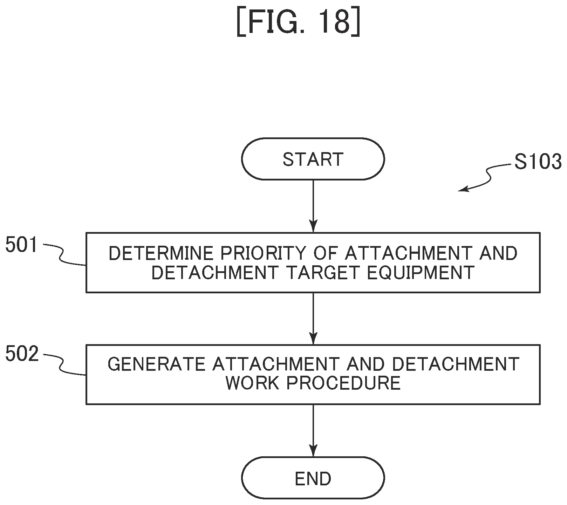

The details of step S103 in FIG. 14 will be explained using FIG. 18.

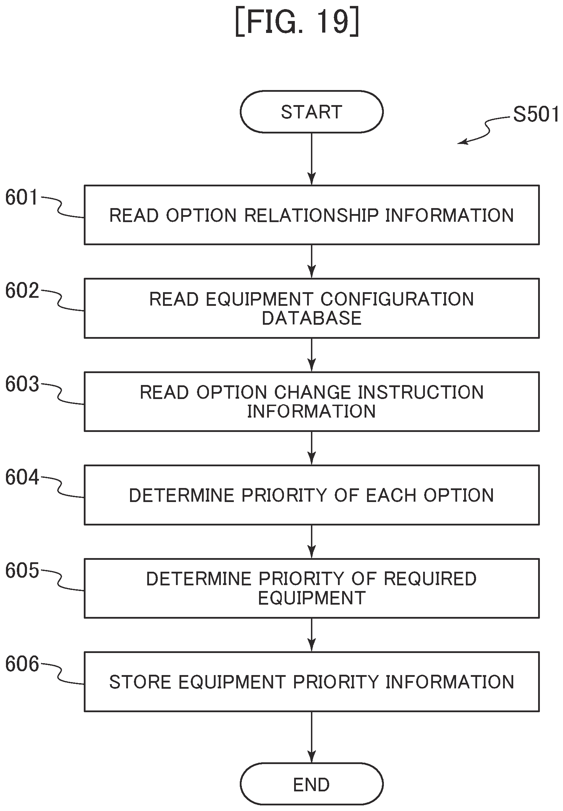

The details of step S501 will be explained using FIG. 19.

First, load the option relationship information 13 (Step S601).

Following step S601, read the equipment configuration database 14 (step S602).

Following step S602, read the option change instruction information 15 (step S603).

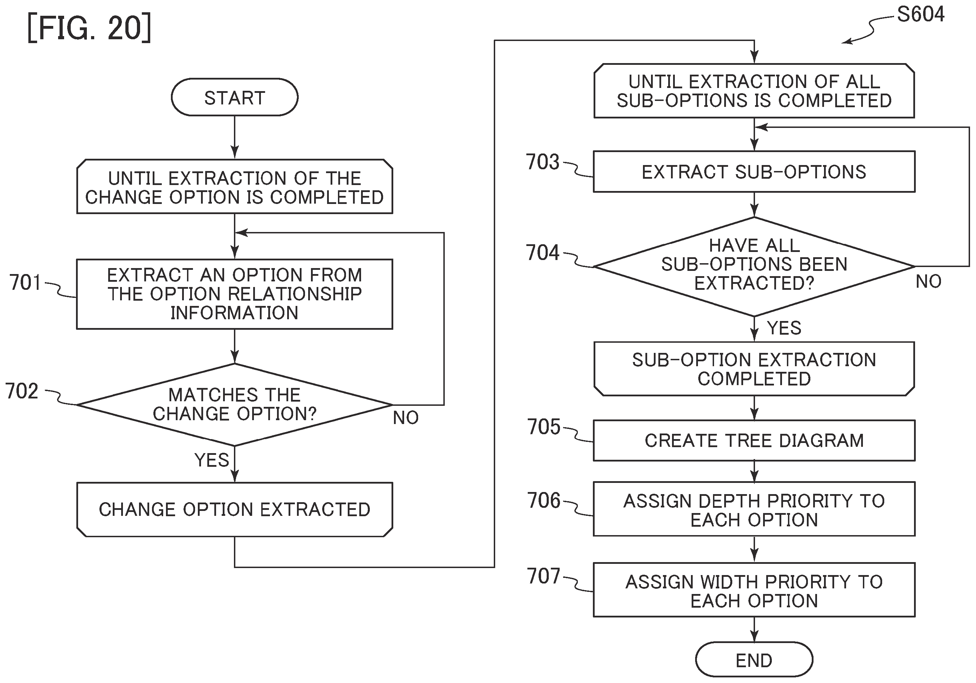

Following step S603, the priority of the change options and their subordinate options is determined (step S604). The details of step S604 will be explained using FIG. 20.

First, extract an option from the option relationship information 13 (Step S701) and determine whether it matches the change option (Step S702). Details of steps S701 and S702 are explained below.

If the result of the determination in step S702 is YES, extract the subordinate options of the change option from the option relationship information 13 (step S703), and determine whether the extraction of all subordinate options is complete (step S704).

If the determination result of step S704 is YES, a tree diagram 33 representing the interrelationship between the change option and its subordinate options is created (step S705).

Following step S705, a breadth-first search is performed on the tree diagram 33 created in step S705, and a priority according to the hierarchical depth (hereafter, a depth priority) is assigned to each option (step S706). In the example in FIG. 10, taking "PRI:1-(i)" as an example of a priority assigned to an option, the portion "1" represents the depth priority. When the change option located at the root of the tree diagram 33 is an option to be added, the options are required to be added in descending order of depth priority. When the change options located at the root of the tree diagram 33 is an option to be removed, the options are required to be removed in ascending order of depth priority.

Following step S706, in the tree diagram 33, the priority within the same level (hereinafter, width priority) is assigned to each option (step S707), and this flow is terminated. In the example shown in FIG. 10, taking the priority assigned to the options, "PRI:1-(i)" as an example, the part "(i)" represents the width priority. The width priority, for example, refers to the option number in the option relationship information 13, and assigns numbers sequentially starting from 1 for those with smaller option numbers. The way of assigning width priority is not particularly restricted as long as there is no identical width priority within the same hierarchy. When comparing the priority of options, depth priority takes precedence over width priority.

Returning to FIG. 19, following step S604, the priority of required equipment is determined for each option (step S605). Here, the required equipment is linked in the order registered in the equipment configuration database 14 according to the priority of each option determined in step S604.

Following step S605, the priority of the required equipment determined in step S605 is saved as equipment priority information 30 (step S606), and the flow is concluded.

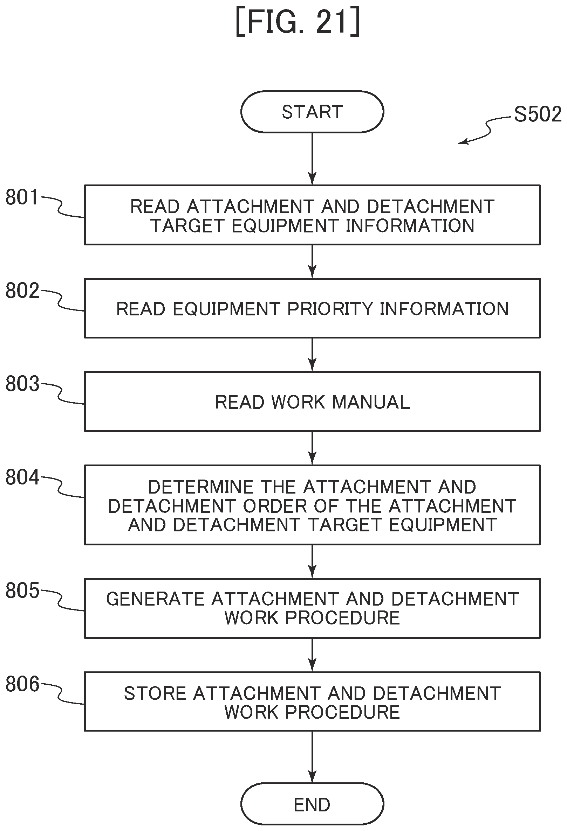

Returning to FIG. 18, following step S501, create an attachment and detachment work procedure 32 (step S502), and conclude this flow. The details of step S502 will be explained using Fig. 21.

First, read the attachment and detachment target equipment information 16 (step S801).

Following step S801, read the equipment priority information 30 (step S802).

Following step S802, read the work manual 31 (step S803). In Work Manual 31, detailed attachment and detachment procedures and post-installation configuration steps (hereafter referred to as work methods) for each piece of equipment are compiled.

Following Step S803, the attachment and detachment order of the attachment and detachment target equipment is determined according to the equipment priority information 30 (Step S804).

Following step S804, the attachment and detachment work procedure 32 is created by linking the work manual 31 in the attachment and detachment sequence of the attachment and detachment target equipment determined in step S804 (step S805).

Following Step S805, the attachment and detachment work procedure 32 created in Step S805 is saved (Step S806), and this flow is completed.

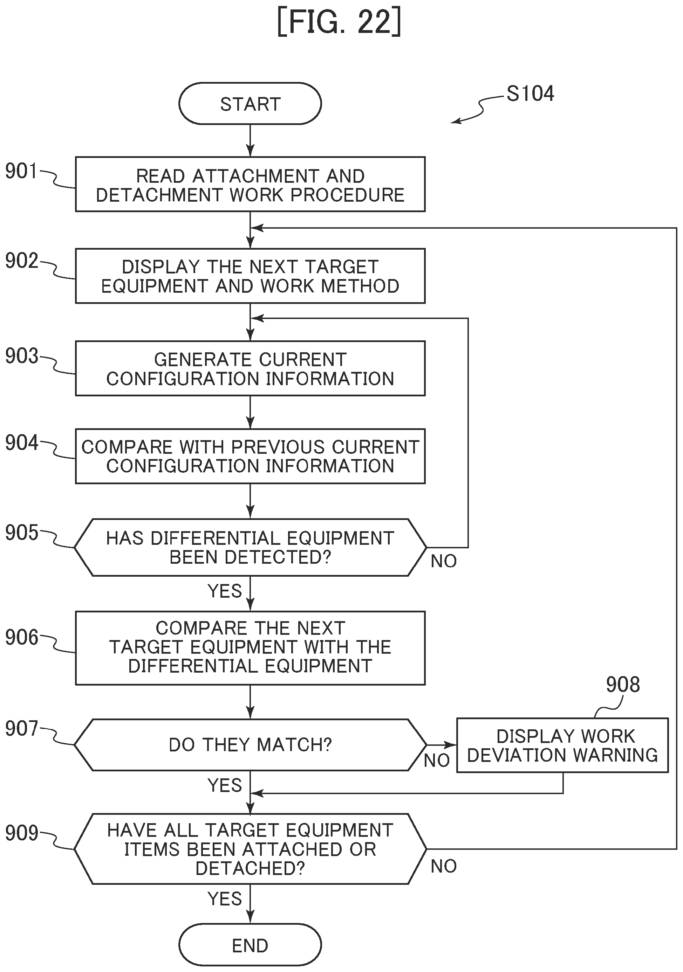

The details of step S104 in FIG. 14 will be explained using FIG. 22.

First, read the attachment and detachment work procedure 32 (Step S901).

Following Step S901, display the next attachment and detachment target equipment and the method of operation based on the attachment and detachment work procedure 32 (Step S902).

Following Step S902, generate the current configuration information 11 (Step S903).

Following Step S903, compare the current configuration information 11 generated in Step S903 with the previously generated current configuration information 11, and extract the differential equipment (Step S904). For example, if an optional monitor has been newly connected, the optional monitor is extracted as the differential equipment.

Following Step S904, determine whether there is any differential equipment (Step S905). If the determination result of Step S905 is NO, return to Step S903.

If the determination result of Step S905 is YES, compare the next attachment and detachment target equipment with the differential equipment obtained in Step S904 (Step S906), and determine whether they match (Step S907). For example, if the next attachment and detachment target equipment is a GNSS receiver while an optional monitor is extracted as differential equipment, the determination result of Step S907 will be NO.

If the determination result of Step S907 is NO, create a connection equipment deviation warning 50 and output it to the display device 6 (Step S908). In the specific example mentioned above, as shown in FIG. 13, the attachment and detachment procedure of the incorrectly installed optional monitor is displayed step by step. The display device 6 may show the entire attachment and detachment procedure or extract a part to display.

Following Step S908, or if the determination result of Step S907 is YES, determine whether the attachment and detachment of all attachment and detachment target equipment is complete (Step S909). In the specific example mentioned above, since the installation of at least the GNSS receiver has not been completed, the determination result of Step S909 will be NO.

If the determination result of Step S909 is NO, return to Step S902, and if YES, end the flow.

### (SUMMARY)

In this embodiment, the optional-equipment attachment and detachment support system 200 includes an information controller 4 that controls functions to support attachment and detachment work of optional equipment 3 with respect to the work machine 100. The information controller 4 comprises an attachment and detachment target determination unit 4a configured to determine attachment and detachment target equipment that is optional equipment 3 to be attached or detached, a work procedure generation unit 4b configured to generate an attachment and detachment work procedure 32 based on an interrelationship between a plurality of pieces of the optional equipment 3, and a deviation determination unit 4c configured to output a connection equipment deviation warning 50 when the optional equipment 3 instructed to be attached or detached next in the attachment and detachment work procedure 32 differs from the optional equipment 3 newly attached or detached.

According to the present embodiment configured as above, the attachment and detachment work procedure 32 for the target equipment is presented to the worker in an order that considers the interrelationship among a plurality of pieces of optional equipment 3, and a warning is issued if work deviates from the attachment and detachment work procedure 32. This makes it possible to reduce labor for attachment and detachment operations of optional equipment 3 for the work machine 100 while suppressing work errors and ensuring the functioning of newly added options on the work machine 100.

Additionally, the optional-equipment attachment and detachment support system 200 in this embodiment is equipped with an input device 6 for specifying a change option, which is an option to be added or removed. The information controller 4, through the attachment and detachment target determination unit 4a, generates the current configuration information 11 representing the configuration of the optional equipment 3 currently attached to the work machine 100. Based on the equipment configuration database 14, which represents the configuration of optional equipment 3 required for each option, and the option relationship information 13, which represents the interrelationship among a plurality of pieces of optional equipment 3, the controller generates the option required configuration information 12 representing the configuration of the optional equipment 3 required for the change option specified via the input device 6. By extracting a difference between the option required configuration information 12 and the current configuration information 11, the attachment and detachment target equipment is determined. This allows workers to grasp only the optional equipment 3 that requires attachment and detachment operations.

Additionally, in this embodiment, the information controller 4, through the work procedure generation unit 4b, generates equipment priority information 30 indicating the attachment and detachment sequence of the optional equipment 3 required for the change option instructed via the input device 6, based on the equipment configuration database 14 and the option relationship information 13. The information controller 4 extracts work methods for the attachment and detachment target equipment from the work manual 31 that describes work methods for each piece of optional equipment 3, and generates an attachment and detachment work procedure 32 by arranging the work methods for the attachment and detachment target equipment in accordance with the equipment priority information 30. This eliminates the need for the worker to refer to the work manual 31, thereby reducing the effort required for attachment and detachment work.

Additionally, in this embodiment, the information controller 4 uses the connection equipment deviation warning 50 to notify that optional equipment 3 that is erroneously attached or detached should be returned to a state before the attachment or detachment. This allows the worker to promptly correct work errors.

While the embodiments of the invention have been detailed above, the invention is not limited to the embodiments described above and includes various modifications. For example, the described embodiments have been detailed for easy understanding of the invention and are not necessarily limited to including all configurations described.

### Description of Reference Characters

1: Controller
2: Connection device
3: Optional equipment
4: Information controller
4a: Attachment and detachment target determination unit
4b: Work procedure generation unit
4c: Deviation determination unit
5: Display controller
6: Display device (Input device)
7: Vehicle network
10: Connected equipment name information
11: Current configuration information
12: Option required configuration information
13: Option relationship information
14: Equipment configuration database
15: Optional change instruction information
16: Attachment and detachment target equipment information
20: Attached equipment acquisition function
21: Required equipment search function
22: Configuration comparison function
30: Equipment priority information
31: Work manual
32: Attachment and detachment work procedure
33: Tree diagram
40: Priority determination function
41: Procedure creation function
50: Connection equipment deviation warning
60: Attachment and detachment result determination function
100: Hydraulic excavator (Work machine)
101: Lower travel body
102: Upper swing body
103: Front work machine
104: Travel motor
105: Operator's cab
106: Boom
107: Arm
108: Bucket
109: Boom cylinder
110: Arm cylinder
111: Bucket cylinder
200: Optional-equipment attachment and detachment support system.

## Claims

1. An optional-equipment attachment and detachment support system, comprising a controller configured to control a function of supporting an attachment and detachment work of optional equipment for a work machine, wherein the controller comprises:
an attachment and detachment target determination unit configured to determine attachment and detachment target equipment that is optional equipment to be attached and detached;
a work procedure generation unit configured to generate an attachment and detachment work procedure for the attachment and detachment target equipment based on interrelationships among a plurality of pieces of the optional equipment; and
a deviation determination unit configured to output a connection-equipment deviation warning when a piece of optional equipment newly attached or detached differs from a piece of optional equipment instructed to be attached or detached next in the attachment and detachment work procedure.

2. The optional-equipment attachment and detachment support system according to claim 1, further comprising an input device for indicating a change option that is an option to be added or removed, wherein the controller is configured to, by the attachment and detachment target determination unit:
generate current configuration information representing a configuration of optional equipment currently installed on the work machine;
generate, based on an equipment configuration database representing a configuration of optional equipment required for each option and option relationship information representing interrelationships among a plurality of pieces of the optional equipment, option required configuration information representing a configuration of optional equipment required for the change option indicated via the input device by the attachment and detachment target determination unit; and
determine the attachment and detachment target equipment by extracting a difference between the option required configuration information and the current configuration information by the attachment and detachment target determination unit.

3. The optional-equipment attachment and detachment support system according to claim 1, further comprising an input device for indicating a change option that is an option to be added or removed, wherein the controller is configured to, by the work procedure generation unit:
generate, based on an equipment configuration database representing a configuration of optional equipment required for each option and option relationship information representing interrelationships among a plurality of pieces of the optional equipment, equipment priority information representing an attachment and detachment order of the optional equipment required for the change option indicated via the input device by the work procedure generation unit; and
generate the attachment and detachment work procedure by extracting a work method for the attachment and detachment target equipment from a work manual that describes a work method for each optional equipment and arranging the work method for the attachment and detachment target equipment in accordance with the equipment priority information by the work procedure generation unit.

4. The optional-equipment attachment and detachment support system according to claim 1, wherein the controller is configured to notify, by the connection-equipment deviation warning, of a work procedure for returning optional equipment that is erroneously attached or detached to a state before the attachment or the detachment.

5. A work machine comprising the optional-equipment attachment and detachment support system according to claim 1.
